Europäisches Patentamt

European Patent Office

Office européen des brevets

(11) Veröffentlichungsnummer: **0 294 507**

**A1**

(12) **EUROPÄISCHE PATENTANMELDUNG**

(21) Anmeldenummer: **87108528.8**

(22) Anmeldetag: **12.06.87**

(51) Int. Cl.⁴: **B29C 43/22 , B29C 67/00 ,
E04F 13/00**

(43) Veröffentlichungstag der Anmeldung:
**14.12.88 Patentblatt 88/50**

(84) Benannte Vertragsstaaten:
**AT BE CH DE ES FR GB GR IT LI LU NL SE**

(71) Anmelder: **AGRU ALOIS GRUBER & SOHN
OHG**
**Grünburger Strasse 41**
**A-4540 Bad Hall(AT)**

(72) Erfinder: **Gruber, Alois, Sen.**
**Grünburger Strasse 41**
**A-4540 Bad Hall(AT)**

(74) Vertreter: **Rupprecht, Klaus, Dipl.-Ing.**
**Kastanienstrasse 18**
**D-6242 Kronberg(DE)**

(54) Verfahren und Vorrichtung zur Herstellung von Noppenplatten, nach diesem Verfahren hergestellte Noppenplatte und deren Verwendung.

(57) Es wird ein kontinuierliches Verfahren zur Herstellung von Platten oder Matten aus thermoplastischen Kunststoffen beschrieben, auf denen einseitig Noppen aus dem gleichen Kunststoffmaterial einstückig angeordnet sind. Das Kunststoffmaterial ist insbesondere Polyethylen, Polypropylen, Polyvinylidendifluorid, Polyvinylchlorid od. dgl. Bei dem Herstellungsverfahren wird ein Platten-oder Mattenrohling aus einer Längsdüse eines Extruders zwischen den Spalt zweier Walzen gegeben, von denen die eine als Profilwalze zur Ausformung der Noppen ausgebildet ist. Die Noppen werden anschließend durch ein ortsfest angebrachtes Schlitzwerkzeug hindurchgeführt, um sie mit Hinterschneidungen zu versehen. Die auf diese Weise hergestellte endlose Noppenplatte wird anschliessend in Einzelbahnen unterteilt.

FIG.1

## Verfahren und Vorrichtung zur Herstellung von Noppenplatten, nach diesem Verfahren hergestellte Noppenplatte und deren Verwendung

Die Erfindung bezieht sich auf ein Verfahren zum Herstellen von Kunststoffplatten, insbesondere aus thermoplastischem Kunststoff, die mindestens auf einer Seite mit Hinterschneidungen aufweisenden Noppen versehen sind.

Noppenplatten aus Kunststoff finden insbesondere Anwendung im Betonbehälterbau, wenn es gilt, flüssigkeits- und auch gasdichte, chemikalienresistente Behälter zu erstellen. Die Kunststoffplatten bilden die Auskleidung solcher Behälter. Sie erbringen die Beständigkeit gegen die Chemikalien und Flüssigkeiten. Die mechanische Festigkeit der Gesamtkonstruktion wird im wesentlichen von der Betonkonstruktion erbracht. Schwierigkeiten bereitet in aller Regel die Verbindung der Kunststoffplatten mit der Betonkonstruktion, da die glatte Kunststoffplatte keine feste mechanische Verbindung mit dem Beton eingeht. Die Zuhilfenahme von Klebern führt zu keinen langfristig zufriedenstellenden Ergebnissen.

Aus diesem Grunde sind verschiedene Verankerungselemente mit Hinterschneidungen vorgeschlagen worden, die auf einer Seite der Kunststoffplatte angebracht und die bei der Herstellung des Behälters einbetoniert werden. Auf diese Weise wird die erwünschte feste Verbindung zwischen Kunststoffplatte und Betonunterkonstruktion zwar erreicht, die Anbringung der bekannten Verankerungselemente an den Kunststoffplatten ist jedoch vergleichsweise aufwendig, da sie nachträglich erfolgt und mehrere Arbeitsschritte benötigt.

So ist beispielsweise in der DE-OS 31 08 972 ein Verfahren beschrieben, bei dem getrennt hergestellte Ankernoppen gleichzeitig auf die Kunststoffplatte aufgesetzt und dort mittels Schweißen befestigt werden. Diese Art der Aufbringung von Ankernoppen ist bei der Vielzahl der anzubringenden Ankerelemente überaus zeitaufwendig oder man benötigt eine entsprechend aufwendige Vorrichtung. Darüber hinaus weisen diese Ankernoppen im Bereich ihres Fußes scharfkantige Übergänge in sich selbst und bezüglich der Kunststoffplatte auf, wodurch es zu Kerbspannungen mit den bekannten Überbeanspruchungen kommen kann.

Aus der FR-PS 11 02 294 ist ein Verfahren bekannt geworden, mit dem Auskleidungsplatten durch Extrudieren hergestellt werden. Bei der Extrusion werden auf einer Plattenseite, bedingt durch den Extrusionvorgang, über die gesamte Plattenlänge Ankerleisten vorgesehen, die auch hinterschnitten sein können. Dieses Verfahren kann nur für relativ dicke Kunststoffplatten angewendet werden, um eine gleichmäßige Ausbildung der Ankerleisten zu gewährleisten. Letztere bewirken auch eine linienförmige Kraftableitung zwischen den Kunststoffplatten und dem Beton des Bauwerks. Hierdurch entsteht ein ungleichmäßiger Spannungsverlauf in der Platte, was deren Dauerstandfestigkeit entgegensteht. Die Aufgabe der vorliegenden Erfindung besteht somit darin, insbesondere ein Verfahren zur Herstellung einer Kunststoffplatte, vorzugsweise aus thermoplastischem Kunststoff, zu schaffen, mit dem in einem einzigen Arbeitsvorgang derartige Platten mit quasi diskreten Noppen hergestellt werden können. Diese Aufgabe ist gemäß der Erfindung dadurch gelöst, daß ein Plattenrohling durch Extrudieren aus einer Schlitzdüse geformt wird, daß der Plattenrohling zwischen zwei Walzen von denen mindestens eine eine Profilwalze ist, hindurchgeführt wird, wobei auf der einen Seite der Profilwalze die Noppen aus dem Material des Plattenrohlings geformt werden, und daß die gebildeten Noppen unter im wesentlichen translatorischer Bewegung durch ein die Hinterschneidungen erzeugendes Werkzeug geführt werden.

Mit dem erfindungsgemäßen Verfahren erhält man eine Kunststoffplatte, an der auf einer Seite hinterschnittene Noppen als spätere Verankerungselemente im Beton einstückig vorgesehen sind. Form und Verteilung der Noppen werden durch die Wahl der Profilwalze grundsätzlich bestimmt. Die erwünschten Hinterschneidungen werden durch ein vorzugsweise im Bereich der Glättwalze vorgesehenes weiteres Werkzeug bestimmt.

Die Erfindung beinhaltet auch Lösungsvorschläge für eine Vorrichtung zur Durchführung des erfindungsgemäßen Verfahrens sowie für die Noppenplatte an sich und deren Verwendung.

Weitere Einzelheiten, Merkmale und Vorteile der Erfindung ergeben sich aus der folgenden Beschreibung, der schematischer Zeichnung sowie den Unteransprüchen. Es zeigen:

Fig. 1 einen vertikalen Querschnitt durch ein Walzengerüst samt Extruder und Hinterschneidungswerkzeug zur Herstellung von Noppenplatten;

Fig. 2 eine Stirnansicht des Hinterschneidungswerkzeugs in Richtung des Pfeiles A;

Fig. 3 eine teilweise Draufsicht der mit Noppen versehenen Seite der erfindungsgemäßen Noppenplatte und

Fig. 4 einen Querschnitt nach Linie IV-IV der Fig. 3.

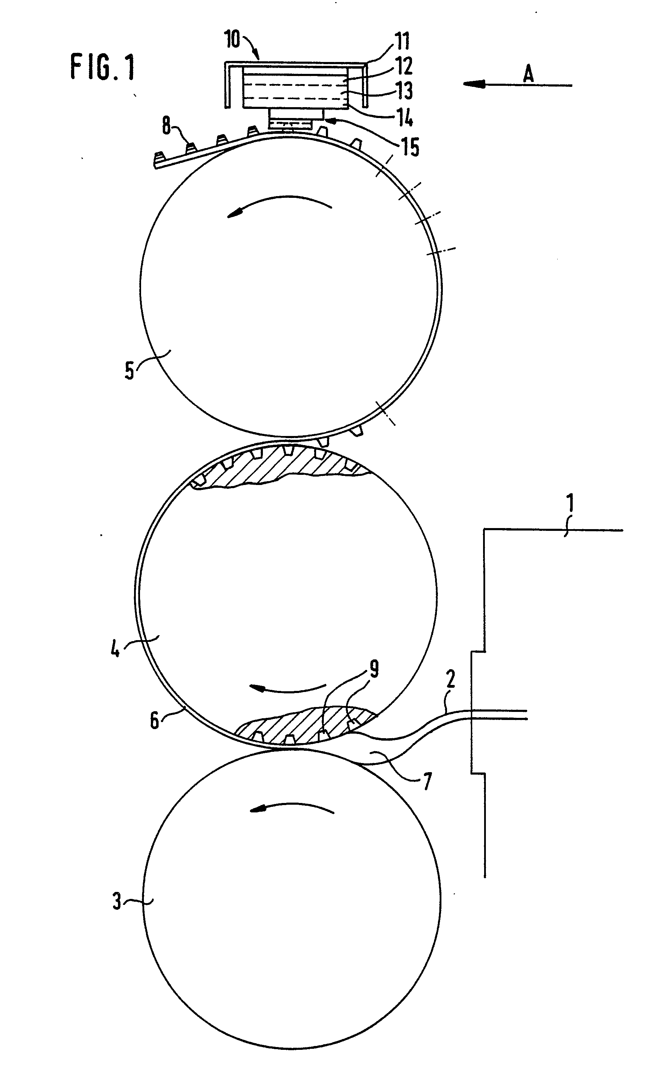

Gemäß Fig. 1 wird aus einer Längsdüse eines Extruders 1 ein Plattenrohling 2 extrudiert und dem Walzenschlitz zwischen einer Glättwalze 3 und einer Profilwalze 4 zugeführt. Im Anschluß an die Profilwalze läuft die bereits mit Noppen versehene Kunststoffplatte oder Noppenplatte 6 durch einen Walzenspalt zwischen der Profilwalze 4 und einer Kühlwalze 5, um von dieser dann, wie dargestellt, abgeführt zu werden.

Wie sich aus Fig. 1 weiterhin ergibt, tritt der Plattenrohling 2 aus der Längsdüse des Extruders 1 mit einer Dicke aus, die größer als die Dicke der anschließend gebildeten Noppenplatte 6 im Bereich außerhalb deren Noppen ist. Dadurch kommt es vor dem Walzenspalt zwischen Glättwalze 3 und Profilwalze 4 zu einem Materialstau 7, der zum Aufbau oder Ausbildung von Noppen 8 dient, d. h. der zunächst den Materialstau 7 bildende Kunststoff tritt in Ausnehmungen 9 der Profilwalze 4 ein, die den Noppen 8 entsprechen. Es liegt auf der Hand, daß Ausbildung und Abbau des Materialstaus 7 abhängig ist oder beeinflußt werden kann durch Extrusionsgeschwindigkeit des Extruders 1, Höhe des Walzenspaltes des Extruders und Umlaufgeschwindigkeit der Walzen 3 bis 5.

Kurz vor der Abnahme der Noppenplatte oder Noppenbahn 6 von der Kühlweise 5 ist ein Werkzeug 10 zur Ausbildung von Hinterschneidungen der Noppen 8 vorgesehen, die zur sicheren Verankerung der Noppenplatte später im Beton eines Bauwerks, vorzugsweise eines Behälters oder Rohres oder einer Rinne, gewünscht sind.

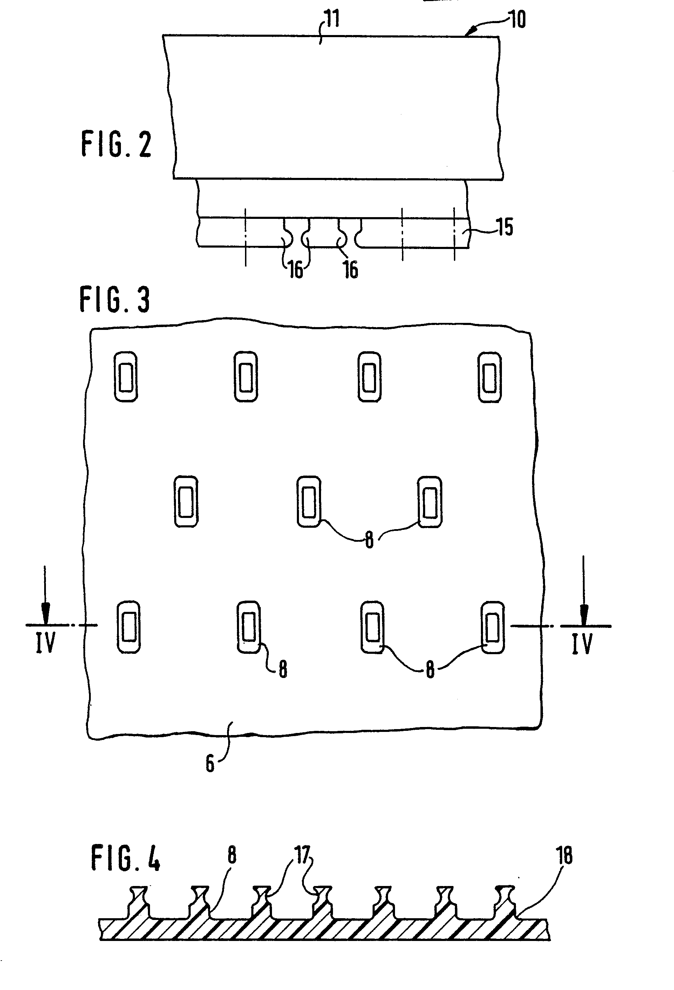

Wie sich aus Fig. 1 und 2 ergibt, besteht das Werkzeug 10, das grundsätzlich fest bezüglich den Walzen 3 bis 5 und somit auch der darauf befindlichen Noppenplatte angeordnet ist, aus einer Abdeckung 11, einer Wärmeisolierung 12, einem Tragkörper 13, einer Heizpatrone 14 sowie einem Schlitzwerkzeug 15. In der Heizpatrone 14 befindet sich vorzugsweise eine elektrische Widerstandsheizung zur Beheizung des Schlitzwerkzeuges.

Das Werkzeug 10 ist so bezüglich der gebildeten Noppenplatte 6 angeordnet, daß die in der Profilwalze 4 gebildeten Noppen durch das Schlitzwerkzeug 15 hindurch bewegt werden, wodurch es zur Bildung von Hinterschneidungen kommt, die den Bereichen 16 des Schlitzwerkzeuges entsprechen.

Eine bevorzugte Ausführungsform einer mit dem erfindungsgemäßen Verfahren hergestellten Noppenplatte ist als Ausschnitt in den Fig. 3 und 4 gezeigt. Aus Fig. 3 ergibt sich insbesondere eine mögliche Zuordnung der Noppen 8 zueinander. Diese Zuordnung entspricht der Verteilung der Ausnehmungen 9 der Profilwalze 4. Die Fig. 3 zeigt weiterhin die Konizität der Noppen 8.

Fig. 4 verdeutlicht die Wirkung des Werkzeugs 10. Man erkennt deutlich die Hinterschneidungen 17, die den Bereichen 16 des Schlitzwerkzeuges 15 entsprechen. Weiterhin erkennt man die abgerundeten Bereiche 18 am Fuße der Noppen 8 beim Übergang in die Platte 6 zur Vermeidung von -

scharfen Übergängen und den damit auftretenden Kerbspannungen oder Spannungskonzentrationen, insbesondere bei der späteren bestimmungsgemäßen Verwendung der Noppen platte. Die Konizität der Noppen 8 ist ebenfalls in Fig. 4 verdeutlicht. Man erkennt, daß die einzelnen Noppen, im Schnitt gesehen, einen Winkel von 4 Grad mit der Senkrechten einschließen. Dies gilt auch für die Seite der Noppen, die derjenigen mit dem eingezeichneten Winkel von 4 Grad gegenüberliegt.

In Fig. 3 und 4 sind in kleinerer Schrift gegenüber den Bezugsziffern Maße der Noppenplatte 6 und der Noppen 8 in Millimeter angegeben. Diese Maße verdeutlichen ein besonders bevorzugtes Ausführungsbeispiel der Erfindung, mit dem ein wesentlicher Bereich aller in Frage kommenden Anwendungsfälle abgedeckt werden kann. Dennoch können natürlich mit dem erfindungsgemäßen Verfahren auch Platten praktisch beliebig anderer Maße hergestellt werden. Hervorzuheben ist jedoch, daß mit dem erfindungsgemäßen Verfahren in einem einzigen Arbeitsgang Platten mit einstückig darauf angeordneten Noppen in beliebiger Anordnung in Abhängigkeit von der Ausbildung der Profilwalze 4 und des Werkzeugs 10 hergestellt werden können. Von besonderer Bedeutung ist auch, daß hierbei ein runder Übergang am Fuße der Noppen 8 gegenüber der eigentlichen Platte 6 erzeugt werden kann.

Die Noppenplatten 6 können insbesondere aus allen thermoplastischen Kunststoffen, wie Polyethylen, Polypropylen, Polyvinylidenfluorid, Polyvinylchlorid, gefertigt werden.

Eine gängige Breite der Längsdüse des Extruders, aus der der Plattenrohling 2 austritt, beträgt 1,5 Meter. Es werden Noppenplatten mit einer Dicke zwischen den Noppen von 1,5 bis 10 Millimeter gewalzt. Die Höhe der Längsdüse des Extruders sollte dann jeweils etwas größer als diese Dicke sein, so daß es zum Aufbau des Materialstaus 7 vor dem Walzenspalt der Walzen 3 und 4 kommt, um, wie erwähnt, aus dieser Materialanhäufung die Ausnehmungen 9 der Profilwalze auszufüllen und so die Noppen 8 zu formen, die dann in dem Werkzeug 10 einer zusätzlich Bearbeitung unterzogen werden.

Es liegt auf der Hand, daß mit dem Schlitzwerkzeug 15 auch andere geometrische Formen als die gezeigten erzeugt werden können. Wesentlich ist bei der Ausbildung des offenen Querschnitts dieses Schlitzwerkzeugs 15, daß eine wirksame Hinterschneidung an den Noppen 8 bei deren Durchtritt durch diesen offenen Querschnitt erzeugt wird, um auf diese Weise eine gute Verankerung bei der erfindungsgemäßen Verwendung der Noppenplatte zur Auskleidung von Behältern, Röhren, Rinnen od. dgl. zu gewährleisten.

In der Fig. 1 ist ein bevorzugtes Ausführungsbeispiel des erfindungsgemäßen Verfahrens bzw. der erfindungsgemäßen Vorrichtung gezeigt. Das Werkzeug 10 muß jedoch nicht notwendigerweise in der in dieser Fig. 1 gezeigten Stellung angeordnet werden. So kann es zum Beispiel ebenfalls im ersten oder zweiten Quadranten der Kühlwalze 5 vorgesehen sein. Auch ist es denkbar, daß es bezüglich der Fig. 1 weiter links angeordnet ist, wenn die Noppenplatten 6 auf einen Tisch oder ein anderes Unterstützungselement geleitet wird. Grundsätzlich ist es auch denkbar, daß die Kühlwalze 5 entfallen kann und daß das Werkzeug 10 dann in einer Position vorgesehen ist, die etwa dem zweiten Quadranten der gezeichneten Walze 5 zuzuordnen ist, wobei dann eine andere Stützeinrichtung anstelle der Kühlwalze 5 vorgesehen sein muß, um den Spalt zwischen dem Werkzeug 10 und der Noppenplatte 6 zu definieren, so daß es zu einer definierten Bearbeitung der Noppen 8 mit dem Werkzeug 10 kommt.

Der Vollständigkeit halber sei noch erwähnt, daß die Profilwalze 5 über ihren gesamten Umfang mit den Ausnehmungen 9 versehen ist, die aus Vereinfachungsgründen nur in zwei Teilbereichen gezeigt sind.

Die nach dem erfindungsgemäßen Verfahren kontinuierlich und somit endlos hergestellte Noppenplatte 6 kann nach Durchführung der Noppen 8 durch das Werkzeug 10 in praktisch beliebig breite Einzelstücke unterteilt werden. Die Dicke der Noppenplatte 6, ohne die Noppen 8, beträgt in der Regel, wie erwähnt, 1,5 bis 10 Millimeter. Abweichungen von diesen Grenzen sind jedoch möglich, insbesondere größer als 10 Millimeter.

An der Profilwalze 4 kommt es zu einer ersten formstabilen Verfestigung der Noppen 8. Eine weitere Stabilisierung der Konfiguration von Noppen 8 und Platte 6 wird durch den Kontakt mit der Kühlwalze 5 herbeigeführt.

Wie bereits angesprochen, ist das Werkzeug 10 mit einer Heizpatrone 14 oder Heizeinrichtung versehen, die insbesondere das Schlitzwerkzeug 15 erhitzt und zwar auf eine solche Temperatur, daß der thermoplastische Kunststoff der Noppen 8, bei deren Durchtritt durch die Schlitze des Werkzeugs durch die Wärmeeinwirkung gut verformbar ist. Die in der Heizpatrone 14 erzeugte Wärme wird vorzugsweise auf das Schlitzwerkzeug 15 übertragen, da auf der letzterem gegenüberliegenden Seite der Heizpatrone 14 hinter dem Tragkörper 13 eine Wärmeisolierung 12 vorgesehen ist. Es kommt somit zu einer bevorzugten Wärmeübertragung auf das Schlitzwerkzeug 15.

Durch die beschriebene zusätzliche Anordnung des Werkzeugs 10 mit seinem Schlitzwerkzeug 15 kommt es gemäß der Erfindung zu einer präzisen Ausformung nicht nur der Hinterschneidungen 17 der Noppen 8. Es kann vielmehr auch nochmals der Übergang im Fußbereich der Noppen 8 bezüglich der Platte 6 dahingehend bearbeitet oder nachbearbeitet werden, daß dieser Übergang effektiv abgerundet ausgebildet wird. Auf diese Weise werden scharfkantige Übergänge und die Ausbildung von Kerbspannungen vermieden, die später beim bestimmungsgemäßen Gebrauch der Noppenplatte wegen einer Anhäufung von Spannungen zu einem vorzeitigen Bruch oder Reißen der Platte 6 führen könnten.

## Ansprüche

1. Verfahren zum Herstellen von Kunststoffplatten (6), vorzugsweise aus thermoplastischem Kunststoff, die mindestens auf einer Seite mit Hinterschneidungen (17) aufweisenden Noppen (8) versehen sind, dadurch gekennzeichnet, daß ein Plattenrohling (2) durch Extrudieren aus einer Schlitzdüse geformt wird, daß der Plattenrohling (6) zwischen zwei Walzen (3, 4), von denen mindestens eine eine Profilwalze (4) ist, hindurchgeführt wird, wobei auf der einen Seite der Profilwalze (4) die Noppen (8) aus dem Material des Plattenrohlings (2) geformt werden, und daß die gebildeten Noppen (8) unter im wesentlichen translatorischer Bewegung durch ein die Hinterschneidungen (17) erzeugendes Werkzeug (10) geführt werden.

2. Verfahren nach Anspruch 1, dadurch gekennzeichnet, daß die Noppen (8) im plastischen Zustand durch das die Hinterschneidungen erzeugende Werkzeug (10) geführt werden.

3. Verfahren nach Anspruch 1 oder 2, dadurch gekennzeichnet, daß das Werkzeugs (10) beheizt wird.

4. Vorrichtung zur Durchführung des Verfahrens nach mindestens einem der Ansprüche 1 bis 3, gekennzeichnet durch einen den Plattenrohling (2) formenden Extruder (1) mit Schlitzdüse, ein Paar von Kalanderwalzen (3, 4), deren eine als die Noppen (8) aus dem Plattenrohling (2) ausformende Profilwalze (4) ausgebildet ist, und durch ein den Kalanderwalzen (3, 4), nachgeschaltetes, die Noppen (8) hinterschneidendes Werkzeug (10).

5. Vorrichtung nach Anspruch 4, dadurch gekennzeichnet, daß das Werkzeug mit einer Heizeinrichtung versehen ist.

6. Noppenplatte, hergestellt nach dem Verfahren nach mindestens einem der Ansprüche 1 bis 3.

7. Noppenplatte nach Anspruch 6, dadurch gekennzeichnet, daß sie einstückig aus Thermoplast hergestellt ist, Hinterschneidungen aufweist und die Übergänge von Plattenoberfläche zum Fußbereich der Noppen (8) abgerundet ausgebildet sind.

8. Verwendung der nach dem Verfahren nach mindestens einem der Ansprüche 1 bis 3 hergestellten Noppenplatte (6) als verlorene Schalung, insbesondere beim Betonbehälterbau.

EP 0 294 507 A1

FIG. 1

FIG. 2

11    10

15

16    16

FIG. 3

8

IV                                        IV

8              8            8

6

FIG. 4    8    17                    18

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 533 896 (HARTIG)<br>* Figuren 2,3,18,19,20 *<br>--- | 1-8 | B 29 C 43/22<br>B 29 C 67/00<br>E 04 F 13/00 |
| D,A | EP-A-0 059 929 (STEULER-INDUSTRIEWERKE)<br>--- | | |
| A | US-A-4 056 593 (DE NAVAS ALBAREDA)<br>* Figur 5 *<br>--- | | |
| A | US-A-3 089 191 (CONRAD)<br>--- | | |
| A | FR-A-2 276 914 (KARL KOYER ST. ANNE'S LTD)<br>----- | | |

| RECHERCHIERTE SACHGEBIETE (Int. Cl.4) |
|---|
| B 29 C<br>E 04 F |

Der vorliegende Recherchenbericht wurde für alle Patentansprüche erstellt

| Recherchenort | Abschlußdatum der Recherche | Prüfer |
|---|---|---|
| DEN HAAG | 03-03-1988 | ROBERTS P.J. |